# DEMANDE DE BREVET EUROPEEN

(11) **EP 3 364 511 A1**
(43) Date de publication de la demande: **22.08.2018**
(21) Numéro de dépôt: 17156503.9
(22) Date de dépôt: 16.02.2017
(51) Int. Cl.: H02G 3/00

(54) **ÉLÉMENT DE MEUBLE, MEUBLE ET ACCESSOIRE POUR UN TEL MEUBLE**

(71) Demandeur: Walcut S.A., 1870 Monthey 1 (CH)
(72) Inventeur: WÄLTI, Bruno, 1870 Monthey 1 (CH)
(74) Mandataire: Wenger, Joel-Théophile

(57) **Abrégé**

La présente invention concerne un élément de meuble (10) formé d'au moins un panneau (12) réalisé en un matériau conducteur d'électricité. Cet élément de meuble est caractérisé en ce que ledit panneau (12) comporte une bande conductrice (15) électrique disposée contre ledit panneau (12), cette bande conductrice (15) étant séparée dudit panneau (12) par un isolant électrique (14). Cette bande conductrice (15) est en outre accessible au moins dans une zone, depuis l'extérieur du meuble.

L'invention concerne également un meuble comportant au moins un élément de meuble (10) tel que défini ci-dessus, ce meuble comportant en outre au moins une source d'alimentation électrique.

L'invention concerne en outre un accessoire pour élément de meuble tel que défini ci-dessus, cet accessoire nécessitant une alimentation électrique. Cet accessoire est caractérisé en ce qu'il comporte une bande conductrice (36, 41) accessible au moins dans une zone, depuis l'extérieur de cet accessoire, cette bande conductrice (36, 41) étant disposée de manière à pouvoir être connectée électriquement à une bande conductrice (15) d'un élément de meuble.

## Description

### DOMAINE TECHNIQUE

La présente invention concerne un élément de meuble formé d'au moins un panneau réalisé en un matériau conducteur d'électricité.

Elle concerne également un meuble formé par au moins un élément de meuble tel que défini ci-dessus.

Elle concerne également des accessoires nécessitant une alimentation électrique et destinés à être utilisés avec des meubles et des éléments de meubles tels que définis ci-dessus.

### TECHNIQUE ANTERIEURE

Actuellement, lorsqu'un accessoire tel que notamment une lampe ou tout autre appareil électrique ou électronique est placé sur un meuble, il est nécessaire de fournir une alimentation électrique indépendante par câble à proximité de cet accessoire. En effet, la majorité des meubles existants n'est pas connectée à une alimentation électrique.

Il existe des meubles ou des éléments de meubles réalisés à partir de panneaux, dans lesquelles une alimentation électrique est prévue. Parmi ceux-ci, on peut citer les meubles décrits dans la demande de brevet européen EP 1 214 899. Les panneaux permettant la fabrication de meubles comportent un profil dans lequel sont formées deux gorges. Chacune de ces gorges reçoit un câble conducteur électrique. Chacun de ces câbles est en charge de conduire le courant électrique d'une polarité différente.

Un problème avec ce genre de profils est dû au fait que d'une part les conducteurs électriques doivent avoir une section suffisamment grande pour permettre un transport du courant électrique sans chauffer et d'autre part, ils doivent être totalement isolés l'un de l'autre. Il en résulte que la largeur du profil dans lequel ces conducteurs sont disposés doit être relativement grande et peut donc être assez peu esthétique. De plus, il est relativement difficile de réaliser deux gorges parallèles dans le chant d'un panneau, de façon à éviter tout contact entre les conducteurs.

La présente invention se propose de réaliser un meuble et des éléments de meubles dans lesquels une alimentation électrique est fournie, tout en évitant les difficultés de fabrication et les contraintes liées à la réalisation décrite dans la demande de brevet susmentionnée.

La présente invention se propose en outre de réaliser des accessoires pour de tels meubles ou éléments de meuble, susceptibles d'être alimentés par ce meuble ou cet élément de meuble sans devoir recourir à une alimentation indépendante.

### EXPOSE DE L'INVENTION

Le but de l'invention est atteint par un élément de meuble tel que décrit en préambule et caractérisé en ce que ledit panneau comporte une bande conductrice électrique disposée contre ledit panneau, cette bande conductrice étant séparée dudit panneau par un isolant électrique, cette bande conductrice étant en outre accessible au moins dans une zone, depuis l'extérieur du meuble.

Le but de l'invention est également atteint par un meuble caractérisé en ce qu'il est formé d'éléments de meuble tels que définis ci-dessus et en ce qu'il comporte en outre une source d'alimentation électrique.

Le but est en outre atteint par un accessoire pour élément de meuble tel que défini ci-dessus, et caractérisé en ce qu'il comporte une bande conductrice accessible au moins dans une zone, depuis l'extérieur de cet accessoire, cette bande conductrice étant disposée de manière à pouvoir être connectée électriquement à une bande conductrice d'un élément de meuble.

Selon cette invention, il est possible de réaliser des éléments de meubles ou modules dans lesquels une alimentation électrique est prévue. Cette alimentation électrique est peu visible, ce qui permet de ne pas dégrader l'aspect esthétique du meuble. De plus, l'alimentation électrique est relativement simple à réaliser et n'impose pas des contraintes de dimension au niveau des éléments qui forment le meuble.

Les meubles selon l'invention permettent de recevoir des accessoires nécessitant une alimentation électrique, comme une lampe, un chargeur pour appareil électrique ou électronique, un haut-parleur, un ventilateur ou d'autres appareils équivalents. Ces accessoires ne requièrent pas une alimentation câblée spécifique individuelle.

Ceci présente un avantage du fait qu'il suffit de placer l'accessoire dans une position adéquate pour que celui-ci soit alimenté électriquement. Ceci évite les problèmes de câblage, la nécessité de disposer d'un nombre important d'alimentations électriques et l'utilisation d'un grand nombre de transformateurs.

Le meuble de l'invention a en outre un aspect très esthétique du fait de l'absence de câbles pour chaque accessoire et peut ainsi être utilisé dans des endroits ou pour des applications dans lesquelles l'aspect esthétique est important. Ceci peut être le cas par exemple lorsque le meuble est utilisé pour exposer ou mettre en valeur des objets.

Le meuble de l'invention peut être formé de plusieurs modules. Ces modules peuvent être placés en contact les uns avec les autres. Un avantage de l'invention est qu'il n'est pas nécessaire d'alimenter de façon indépendante les différents modules. Au contraire, une seule alimentation suffit pour l'un des modules. Les autres modules sont alimentés à partir du premier module, sans câblage apparent. Ceci permet une grande souplesse dans la réalisation de meubles puisque la disposition d'un module par rapport à un autre n'est pas limitée par des contraintes de connexions électriques. De plus, les connexions ne sont pas apparentes, ce qui permet d'assurer un aspect esthétique à l'ensemble obtenu.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue de face d'un meuble selon la présente invention, dans une première configuration ;
- la figure 2 est une vue de dos d'un meuble selon l'invention, selon une deuxième configuration ;
- la figure 3 est une vue en coupe d'un détail d'un élément de meuble selon l'invention ;
- les figures 4 à 8 illustrent des variantes de connexion entre deux modules de l'invention ;
- la figure 9 est une vue en perspective d'un connecteur électrique illustré par la figure 4 ;
- la figure 10 est une vue en perspective d'un connecteur mécanique ;
- la figure 11 est une vue partielle en coupe d'un socle de meuble selon la présente invention ;
- les figures 12 à 15 illustrent quatre variantes de réalisation d'un accessoire lié au meuble selon la présente invention ;
- la figure 16 représente schématiquement un connecteur électrique commandé, utilisable dans un meuble selon l'invention; et
- la figure 17 représente un autre accessoire lié au meuble de l'invention.

### MANIERES DE REALISER L'INVENTION

En référence aux figures, la présente invention concerne notamment un élément de meuble 10 ou module ainsi qu'un meuble 11 réalisé à partir d'un ou plusieurs modules 10. Un tel élément de meuble est formé de panneaux conducteurs 12 solidaires les uns des autres. Dans les modes de réalisation illustrés, ces panneaux 12 sont assemblés de façon à former un parallélépipède rectangle. Chacun de ces panneaux est réalisé en un matériau conducteur électrique tel que par exemple de l'acier. Il est à noter que seule l'une des faces des panneaux pourrait être conductrice. Selon un mode de réalisation, la face des panneaux 12 formant la face externe des éléments de meuble 10 est conductrice. De cette façon, lorsque deux éléments de meuble 10 sont en contact l'un avec l'autre, ils sont connectés du point de vue électrique. Selon une variante, la face interne des éléments de meuble peut être conductrice. Dans ce cas, il est nécessaire de prévoir une connexion électrique entre les faces conductrices de deux modules adjacents, comme cela est expliqué plus bas.

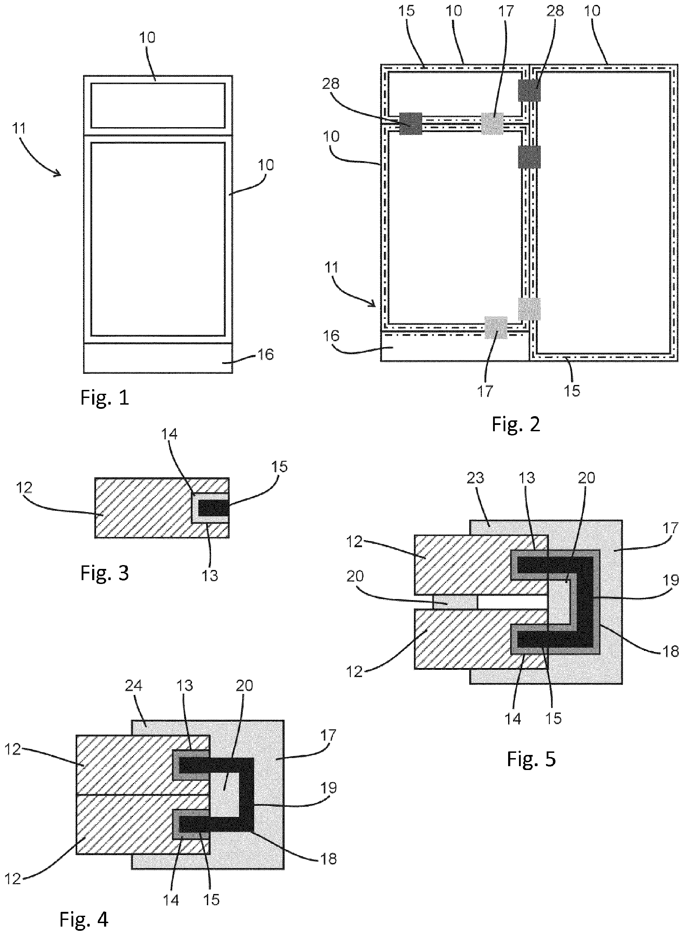

Les panneaux conducteurs 12 comportent une gorge 13 dans laquelle sont disposés d'une part un isolant électrique 14 et d'autre part un conducteur électrique réalisé par exemple sous la forme d'une bande conductrice 15. L'isolant électrique 14 est disposé de manière à empêcher tout contact électrique entre le corps du panneau 12 et la bande conductrice 15. Cet isolant électrique 14 est également disposé de telle façon à laisser l'accès à la bande conductrice 15 par l'extérieur du meuble, au mois dans certaines zones. Ceci est illustré notamment par la figure 3.

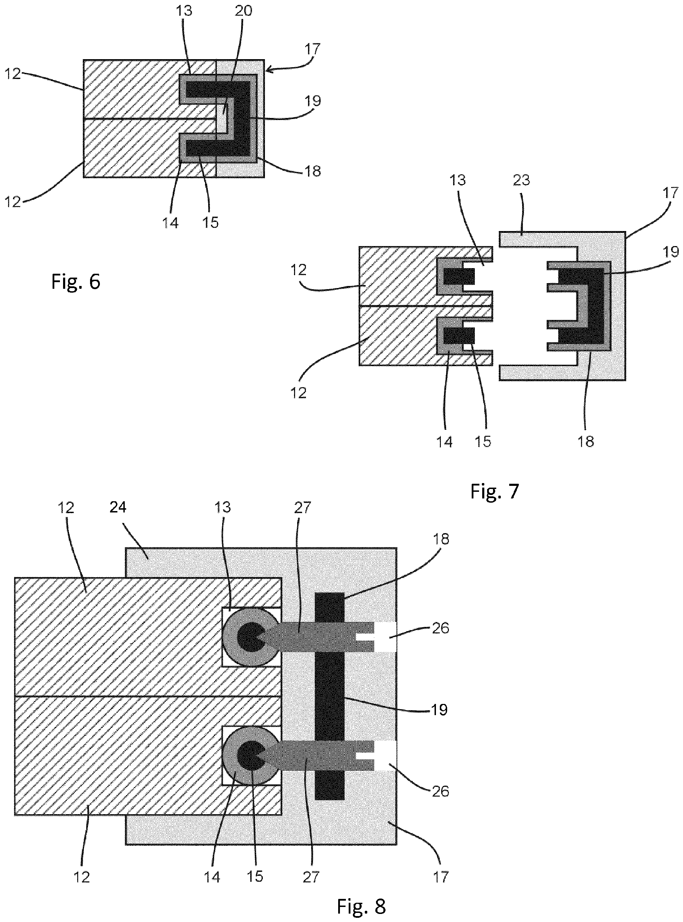

Selon une variante expliquée en détail plus bas en référence à la figure 8, la bande conductrice 15 peut être totalement enrobée d'isolant 14. L'accès à la bande conductrice 15 par l'extérieur du meuble se fait alors à travers l'isolant électrique 14.

Selon un mode de réalisation préféré, la gorge 13 contenant la bande conductrice 15 et l'isolant 14 est réalisée dans un chant du panneau conducteur 12. Cette gorge 13 pourrait toutefois également être réalisée dans un plat de ce panneau.

Selon un mode de réalisation préféré, la gorge 13 est réalisée sur l'un des chants de chacune des panneaux 12, de telle façon que la bande conductrice 15 soit disposée sur toute la périphérie du meuble, sur l'une des faces de ce meuble. Ceci est représenté schématiquement par la figure 2.

Selon une variante, la bande conductrice 15 peut être disposée sensiblement à fleur du panneau 12, que ce soit dans le plat ou le chant de ce panneau. Selon une autre variante, la surface libre de la bande conductrice 15 peut être disposée légèrement en retrait du panneau, dans le plat ou le chant, de telle façon qu'il soit difficile, voire impossible pour une personne, de toucher la bande conductrice 15 avec un doigt. Ceci est notamment représenté par la figure 7.

Comme cela est illustré par les figures 1, 2 et 11, le meuble 11 de la présente invention comporte un socle 16. Selon un mode de réalisation préféré, ce socle est creux et contient un transformateur (non représenté). Ce transformateur est alimenté par une alimentation électrique moyenne tension, du type alimentation électrique domestique. Le courant est transformé en un courant électrique basse tension, typiquement de 5 à 12 V. L'une des polarités de l'alimentation électrique transformée, la polarité positive, est connectée à la bande conductrice 15 placée dans la gorge 13 et l'autre polarité, la polarité négative, est connectée à l'un des panneaux conducteur 12 formant le meuble. Le panneau conducteur formant le meuble joue ainsi le rôle d'un conducteur électrique ou de la masse.

Lors de l'alimentation du meuble, une perte de charge se produit. Il en résulte que la tension à proximité de la source électrique de base, à savoir à la sortie du transformateur, n'est pas la même que la tension en un endroit éloigné de cette source de base.

Il existe plusieurs manières de limiter ou d'éviter les problèmes liés à cette perte de charge. Ceci peut se faire par exemple en agissant sur la tension fournie par le transformateur. Il est également possible de choisir un matériau de la bande conductrice 15 ayant une faible résistivité électrique ou d'agir sur la section de cette bande conductrice 15.

Selon un mode de réalisation préféré, les paramètres tels que la tension délivrée par le transformateur, la résistivité et la section de la bande conductrice 15 sont calculés de façon à ce que la tension à l'endroit le plus éloigné du transformateur soit suffisante pour alimenter des accessoires. Ces accessoires sont équipés d'une électronique qui permet de modifier la tension de façon à l'adapter à ce qui est requis par l'accessoire en question. De cette façon, quel que soit l'endroit où l'accessoire est positionné, il recevra une tension adéquate. Il est à noter qu'il existe également des accessoires qui sont peu sensibles à la tension qu'ils reçoivent et qui fonctionnent dans une large gamme de tensions d'alimentation. Ces accessoires ne nécessitent pas de régulation spécifique.

Il est à noter qu'il est possible de prévoir plusieurs alimentations électriques indépendantes pour le même meuble. Ces alimentations peuvent être disposées dans un même socle ou au contraire, dans des socles différents.

Les panneaux 12 formant un module 10 sont en principe solidaires entre eux. La bande conductrice 15 court dans les panneaux de telle façon qu'une connexion électrique entre plusieurs panneaux conducteurs formant un même module soit assurée. Selon une forme de réalisation avantageuse, tous les panneaux conducteurs 12 formant un module 10 sont alimentés au moyen de la bande conductrice 15. Il est toutefois possible de prévoir que seule une partie des panneaux soit alimentée.

Lorsque plusieurs modules 10 sont assemblés pour former un meuble 11, généralement, une seule source alimentation électrique est prévue. Les modules sont connectés électriquement entre eux au moyen d'un ou de plusieurs connecteurs électriques 17.

Un tel connecteur électrique 17 est notamment illustré par les figures 4 à 9. Ces connecteurs électriques peuvent prendre plusieurs configurations, en particulier selon que les panneaux 12 de deux modules 10 adjacents sont en contact direct l'un avec l'autre ou non lorsque les modules sont assemblés pour former un meuble 11. Dans tous les cas où deux modules adjacents doivent être alimentés par une unique alimentation électrique, le connecteur électrique 17 a pour fonction d'établir une connexion électrique entre les deux bandes conductrices 15 disposées dans chacun des modules 10.

Selon le mode de réalisation illustré par les figures 4 et 6 à 9, le connecteur électrique 17 peut être réalisé en un matériau isolant électrique. Ce connecteur a une coupe sensiblement en forme de U et comprend une gorge longitudinale 18. Cette gorge longitudinale reçoit une bande conductrice 19. Dans les modes de réalisation illustrés par les figures 4 à 7 et 9, la bande conductrice 19 a également une coupe en forme de U, les branches du U étant disposées de telle façon qu'elles soient en contact avec deux bandes conductrices 15 de deux panneaux 12 adjacents lorsque les modules sont montés l'une sur l'autre. Dans le mode de réalisation illustré par la figure 8, la bande conductrice 19 a une coupe longitudinale en forme de I. Un matériau isolant 20 peut être placés entre les branches du U formé par les bandes conductrices 19 ou cette zone peut être laissée vide. Il est clair qu'il faut éviter tout contact électrique entre les bandes conductrices 19 des connecteurs électriques 17 et la masse des panneaux 12.

Dans ce mode de réalisation, le contact électrique entre les masses des panneaux 12 se fait par simple contact direct, les modules 10 étant placés l'un sur l'autre, en contact l'un avec l'autre.

Le mode de réalisation illustré par la figure 5 représente un exemple dans lequel deux panneaux 12 de deux modules 10 adjacents ne sont pas en contact électrique direct l'un avec l'autre lorsque les modules sont assemblés pour former un meuble. Ces modules sont séparés par une entretoise 21 qui pourrait être réalisée en un matériau isolant électrique. Dans ce cas, le connecteur électrique 17 est en charge de la connexion des deux polarités du courant électrique. Le connecteur électrique a sensiblement la même forme que le connecteur de la figure 4. Il comporte un corps 22 réalisé en un matériau conducteur électrique. Ce corps 22 comporte une gorge longitudinale 18 dans laquelle est placée une bande conductrice 19 en forme de U, cette bande conductrice 19 étant isolée du corps 22 au moyen d'un isolant électrique 23.

Dans les cas représentés par les figures 4, 5, 7 et 8, le connecteur électrique 17 joue également le rôle de connecteur mécanique. En effet, ce connecteur électrique est formé de telle façon qu'il participe au maintien mécanique de l'un des éléments de meuble 10 par rapport à l'autre grâce à la présence de deux ailettes 24 qui se placent de part et d'autre des panneaux 12 adjacents de deux modules adjacents lorsque ces modules sont mis en place.

La figure 6 illustre un exemple dans lequel le connecteur électrique 17 a le même fonctionnement que celui illustré par les figures 4 et 5, sans avoir de fonction de maintien mécanique. A cet effet, il ne dépasse pas de l'épaisseur des panneaux 12, mais il est plaqué contre le chant des modules du meuble. Il peut être maintenu en place au moyen d'aimants, d'une colle ou d'éléments de visserie par exemple.

La figure 7 illustre un exemple de connecteur électrique 17 ayant un profil complémentaire au profil du panneau conducteur 12. Dans le mode de réalisation illustré, la bande conductrice 15 du panneau est en retrait par rapport au chant du panneau et cette bande conductrice 15 dépasse de l'isolant électrique 14 disposé dans la gorge 13. Du fait du profil complémentaire du connecteur électrique 17, il est possible de prévoir une certaine contrainte mécanique au moment de la mise en place du connecteur électrique 17. Ceci permet d'assurer une bonne connexion électrique ainsi qu'un maintien mécanique du connecteur contre les panneaux.

Il est clair que de nombreuses formes de profils peuvent être utilisées dans le but d'assurer une connexion électrique et mécanique fiable. Un tel profil pourrait être utilisé avec ou sans ailettes 24 de maintien mécanique.

Dans tous les cas, le connecteur électrique peut être recouvert d'une couche décorative.

Le mode de réalisation illustré par la figure 8 représente un exemple dans lequel la bande conductrice 15 du panneau 12 est enrobée dans un isolant 14. Dans ce mode de réalisation, le connecteur électrique 17 comporte une bande conductrice 19 rectiligne. Ce connecteur électrique 17 comporte au moins deux alésages filetés 26 traversant la bande conductrice 19. Le connecteur comporte également au moins deux vis 27, chacune d'elles étant agencée pour pouvoir être placée dans un l'un des alésages filetés 26 et pour percer l'isolant 14 entourant la bande conductrice 25 du plateau. Les vis 27 étant réalisées en un matériau conducteur électrique, un contact électrique est établi lorsque deux vis sont positionnées de manière à percer l'isolant 14 entourant deux bandes conductrices 25 de deux modules 10 différents.

Dans le cas où les connexions électriques entre les bandes conductrices 15 disposées dans les panneaux 12 et la bande conductrice 19 d'un connecteur électrique n'ont pas une surface de contact suffisante ou un contact suffisamment "ferme", il peut arriver que le transport de courant provoque des étincelles, ce qui peut présenter des risques de détérioration des bandes conductrices et/ou des connecteurs électriques 17.

Afin d'éviter ceci, il est important que les bandes conductrices 15, 19 des panneaux 12 et du connecteur 17 aient un contact suffisamment proche et donc que le connecteur 17 soit correctement plaqué contre les bandes conductrices des panneaux 12. Ceci peut se faire de nombreuses manières différentes. Par exemple, un aimant peut être utilisé pour attirer et maintenir le connecteur 17 contre les panneaux 12. Il est possible d'utiliser la forme et la dimension relative du connecteur 17 et des panneaux 12 pour que le connecteur soit pressé contre les panneaux. Cette forme peut agir au niveau de la partie du connecteur disposée autour des panneaux, par exemple au niveau des ailettes 24, ou au niveau de l'isolant 14 et/ou des bandes conductrices 15 disposés dans les gorges 13 des panneaux par exemple, comme cela est illustré par la figure 7. Une vis pourrait également être utilisée.

Plusieurs éléments de meubles ou modules peuvent être liés entre eux au moyen de connecteurs mécaniques 28. Ceux-ci ont pour fonction de maintenir entre eux deux modules 10, sans être en charge de la connexion électrique.

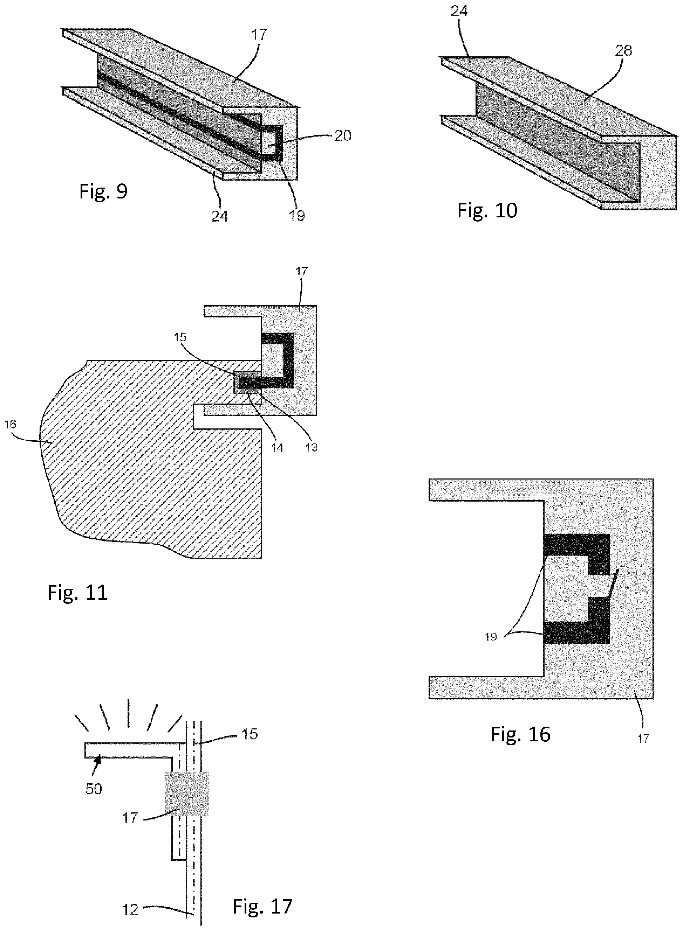

De nombreux modes de réalisation sont envisageables, l'un d'entre eux étant un connecteur ayant la même forme que les connecteurs électriques 17 illustrés par les figures 4 à 9, sans bandes conductrices, et réalisé en un matériau électriquement isolant. Un tel connecteur est représenté par la figure 10. Ces connecteurs mécaniques peuvent être utiles pour assurer un bon maintien des modules les uns par rapport aux autres. Ils ne sont toutefois pas indispensables. Leur utilité dépend de la configuration des meubles, c'est-à-dire de la position et de la taille des modules les uns par rapport aux autres, du fait qu'un module peut glisser ou non lorsqu'il est posé sur une autre et du niveau de sécurité que l'on cherche à obtenir notamment.

Selon un mode de réalisation avantageux, deux modules adjacents sont maintenus entre eux au moyen d'au moins un connecteur électrique 17 et d'un nombre "suffisant" de connecteurs mécaniques 28, ce nombre pouvant être zéro.

Selon une autre variante, deux éléments de meubles 10 adjacents sont reliés entre eux par au moins un connecteur électrique 17, les zones du chant des panneaux non recouvertes par un connecteur électrique étant couverte par un ou plusieurs connecteurs mécaniques. Ainsi, la totalité du chant du meuble pourrait être recouvert soit par un connecteur électrique 17 soit par un ou plusieurs connecteurs mécaniques 28, de façon à assurer une esthétique uniforme. Les zones du meuble dans lesquelles un panneau n'est pas adjacent à un autre panneau pourraient être recouvertes par une baguette de finition ayant un même aspect extérieur que les connecteurs électriques et mécaniques. Ce mode de réalisation permet d'éviter qu'une personne ait accès aux conducteurs électriques en touchant le conducteur disposé dans l'une des gorges.

Comme cela est représenté par la figure 11, le socle 16 comporte dans sa partie supérieure, un panneau similaire à un panneau conducteur 12 formant un module. Ce panneau comporte donc une gorge 13 recevant un isolant électrique 14 et une bande conductrice 15. Elle est également dimensionnée de manière à pouvoir être connectée à un module 10 au moyen d'un connecteur électrique 17 identique aux connecteurs électriques reliant les différents modules entre eux.

Le meuble selon la présente invention peut comporter un certain nombre d'accessoires connectés électriquement à ce meuble et alimentés électriquement par ce meuble. Ces accessoires peuvent être de différents types comme par exemple des lampes, des plateaux lumineux, des chargeurs, des haut-parleurs, des ventilateurs ou toute sorte d'appareils électriques ou électroniques nécessitant une alimentation électrique basse tension.

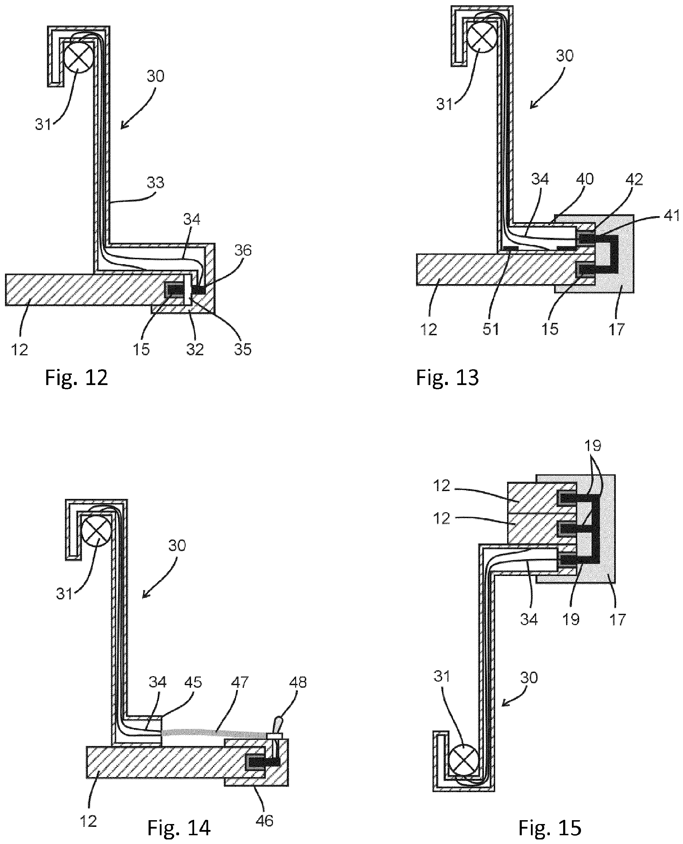

A titre d'exemple, les figures 12 à 15 illustrent une lampe 30. Celle-ci comporte un élément émetteur de lumière 31 comme par exemple une série de diodes électroluminescentes ou une ampoule. La lampe illustrée par la figure 12 comporte une pince de connexion 32 et un corps 33. Le corps de la lampe est creux ou partiellement creux et permet le passage d'un ou deux câbles électriques 34 depuis la pince de connexion 32 à l'ampoule.

Dans le mode de réalisation illustré par cette figure 12, la pince de connexion 32 a une section transversale en forme de U et comporte une gorge 35 dans laquelle est disposée une bande conductrice 36. Cette bande conductrice 36 est placée de telle façon qu'elle soit en contact avec la bande conductrice 15 disposée dans le chant du panneau 12 du meuble lorsque la lampe 30 est en position d'utilisation sur le meuble. Par ailleurs, les branches du U sont formées de façon à se positionner autour du panneau 12 du module 10, de manière à maintenir la lampe 30 en place. Au moins une partie du corps 33 de la lampe ou de la pince de connexion 32 peut être réalisée en un matériau conducteur, de sorte que le contact électrique est réalisé entre le corps du meuble 11 et le corps 33 de la lampe.

La bande conductrice 36 disposée dans la pince de connexion 32 est relié à un câble électrique 34, lui-même connecté à l'ampoule 31. Un autre câble 34 peut être connecté depuis le corps 33 de la lampe à l'ampoule 31, à moins que cette ampoule ne soit connectée à la masse formée par le corps de la lampe. Dans ce cas, un câble n'est pas nécessaire.

Lorsque la lampe est positionnée de telle façon que la pince de connexion 32 de la lampe soit en appui contre le chant d'un panneau 12 et que la bande conductrice 36 de la lampe soit en contact avec la bande conductrice 15 du module, l'ampoule est alimentée. Pour éteindre la lampe, il suffit de la déplacer pour que la bande conductrice 36 de la lampe ne soit plus en contact avec la bande conductrice 15 du panneau. Un interrupteur sur la lampe n'est donc pas indispensable.

Dans le mode de réalisation de la figure 13, la lampe 30 comporte un pied 40 ayant une épaisseur identique à l'épaisseur d'un panneau 12 d'un module. De plus, le pied 40 comporte une bande conductrice 41 disposée dans une gorge 42, similaire à la bande conductrice 15 placée dans le chant d'un panneau 12. De cette façon, la connexion électrique avec la lampe se fait au moyen d'un connecteur électrique 17 identique aux connecteurs électriques utilisés pour connecter entre eux, deux modules adjacents.

Comme dans l'exemple précédent, la lampe 30 peut comporter un interrupteur ou non. Il suffit de déplacer la lampe 30 ou le connecteur électrique 17 pour couper l'alimentation de la lampe et ainsi l'arrêter.

Dans certaines configurations, il est souhaitable de pouvoir déplacer l'accessoire tel que la lampe, sans que l'alimentation électrique ne soit coupée. Le mode de réalisation illustré par la figure 14 permet ceci. Dans ce mode de réalisation, la lampe comporte un pied 45 et une pince de connexion 46, ces deux éléments étant connectés entre eux au moyen d'un câble électrique souple 47. De cette façon, lorsque la lampe 30 doit être alimentée, la pince de connexion 46 est positionnée contre un chant du meuble. La lampe 30 peut être déplacée, la connexion électrique se faisant au moyen du câble électrique souple 47. Un interrupteur 48 peut être placé sur le pied de la lampe ou sur le câble souple. La pince de connexion 46 peut également faire office d'interrupteur.

Selon une variante illustrée par la figure 16, une électronique peut être placée dans les connecteurs électriques 17 et agir comme interrupteur au niveau de l'alimentation des bandes conductrices 19. Les bandes conductrices 19 sont coupées par un interrupteur qui coupe l'alimentation des accessoires concernés lorsque cet interrupteur est ouvert. Lorsque l'interrupteur est fermé, le connecteur électrique fonctionne comme un connecteur électrique décrit en référence aux figures 4 à 9. Cette électronique peut être pilotée par des moyens de communication sans fil de type Bluetooth, wifi, infrarouge, radiofréquences ou autre. Par ce moyen, il est possible d'enclencher ou de déclencher l'alimentation de certains accessoires de façon individuelle. Cette électronique peut être placée dans un accessoire au lieu d'être placée dans un connecteur électrique.

Il est également possible de commander l'alimentation d'un module complet par ce moyen. Il est clair qu'un module qui est connecté uniquement à un module non alimenté ne sera pas alimenté lui-même. Par contre, il est possible de disposer plusieurs connecteurs électriques entre les modules de façon à permettre différents "parcours" électriques pour un module déterminé, ceci permettant de choisir quels sont les modules alimentés et quels sont les modules dont l'alimentation est coupée.

La figure 15 illustre un exemple dans lequel un accessoire tel qu'une lampe 30 est positionné à l'intérieur de l'un des éléments de meuble 10. De plus, cet élément de meuble est adjacent à un autre élément de meuble. Dans ce cas, le connecteur électrique 17 peut comporter trois bandes conductrices 19 ayant une coupe en forme de E. Le principe de fonctionnement de ce connecteur électrique est identique au principe de fonctionnement des connecteurs électriques 17 décrits en référence aux figures 4 à 9.

La figure 17 illustre un autre accessoire qui peut être utilisé avec un meuble selon l'invention. Cet accessoire est une étagère lumineuse 50. L'étagère comporte une feuille électroluminescente de type OLED (Organic Light-Emitting Diode - diode électroluminescente organique) alimentée électriquement par au moins un câble en contact électrique avec la bande conductrice 15 disposée dans le chant de l'un des panneaux 12 d'un module. Le deuxième pôle électrique de la feuille électroluminescente peut être relié à la masse soit au moyen d'un câble, soit directement à la matière formant l'étagère, pour autant que celle-ci soit conductrice d'électricité.

Cette étagère lumineuse 50 peut être positionnée à n'importe quel endroit du module 10 et peut être maintenue en place par toute sorte de moyens tels que la forme du connecteur électrique 17, une vis de fixation, un élément de blocage mécanique disposé sur la tranche de la place, un aimant, ...

Un accessoire tel que décrit ci-dessus peut être positionné dans n'importe quel emplacement du module, pour autant qu'une connexion électrique se fasse entre le conducteur disposé dans l'accessoire et le conducteur disposé dans le module. Ceci permet une très grande souplesse dans le positionnement des éléments et dans les configurations qu'il est possible d'obtenir.

Selon un mode de réalisation avantageux, les accessoires ont au moins un aimant 51 dans la partie en contact avec un panneau. Cet aimant permet de maintenir l'accessoire en place, que ce soit au-dessus, en dessous ou sur le côté d'un élément de meuble.

Les tensions utilisées pour l'alimentation électrique d'un élément de meuble 10 selon cette invention sont choisies de façon à ce qu'elles ne présentent pas de risque pour les êtres vivants qui côtoient ces meubles. Il peut arriver qu'un contact prolongé avec les deux pôles de l'alimentation électrique créent des problèmes. Pour éviter ceci, il est possible de prévoir que le conducteur électrique, une fois en place dans l'élément de meuble, soit légèrement en retrait par rapport à la surface du meuble. Ainsi, il ne sera pas possible de toucher le conducteur électrique par mégarde. Il est clair que les connecteurs électriques 17 doivent être adaptés à ce retrait de façon à assurer un contact efficace.

Selon une variante, il est possible de recouvrir le conducteur électrique ou au moins certaines parties de ce conducteur, d'un élément isolant qui peut également avoir un aspect décoratif.

Il est également possible d'avoir un retrait relativement important du conducteur, l'espace créé entre le conducteur et la surface du meuble étant mis à profit pour fixer le connecteur électrique ou mécanique de façon efficace. La zone formée par ce retrait pourrait recevoir un isolant, comme par exemple une bande cylindrique réalisée en une matière isolante.

Selon un mode de réalisation préféré, la bande conductrice 15 est disposée dans une gorge 13 du chant des panneaux 12 formant les éléments de meuble. Cette gorge n'est toutefois pas obligatoirement réalisée dans le chant, mais pourrait également être formée dans le plat du panneau.

La description de l'invention représente le cas où une seule gorge 13 est réalisée dans chaque panneau. Il est également possible de réaliser plusieurs gorges dans les panneaux, les bandes conductrices disposées dans ces gorges étant alors connectés entre elles et véhiculent donc la même polarité du courant électrique. A titre d'exemple, une gorge pourrait être reliée dans chaque chant de chaque panneau, une gorge supplémentaire étant en outre réalisée dans un bout de l'une des panneaux de façon à connecter électriquement les conducteurs disposés dans toutes les gorges.

Les éléments de meubles 10 de l'invention peuvent être utilisés pour réaliser des meubles 11 modulaires, à partir d'éléments de base assemblés au moyen de connecteurs mécaniques 28 et connectés entre eux au moyen de connecteurs électriques 17. De plus, des accessoires peuvent être ajoutés à ces meubles. Dans les modes de réalisation illustrés, les meubles sont formés de modules ayant une forme de parallélépipède rectangle sans fermeture sur la face avant ni sur la face arrière. Il est bien entendu possible de fixer un élément tel qu'une porte ou un panneau décoratif sur une face opposée à la face comportant une gorge pour le conducteur électrique. Pour ce qui concerne la face proche de la gorge, il est possible de placer un panneau, par exemple légèrement à l'intérieur du module, de sorte que les connecteurs mécaniques et électriques puissent être mis en place. Selon la forme des connecteurs utilisés, le panneau peut être placé au fond du module, sans qu'il soit nécessaire de prévoir un retrait.

Seuls quelques accessoires ont été décrits. Il est clair que toutes sortes d'accessoires différents pourraient être utilisés, sur la base du principe de l'invention, sans sortir du cadre de celle-ci.

## Revendications

1. Elément de meuble (10) formé d'au moins un panneau (12) réalisé en un matériau conducteur d'électricité, **caractérisé en ce que** ledit panneau (12) comporte une bande conductrice (15) électrique disposée contre ledit panneau (12), cette bande conductrice (15) étant séparée dudit panneau (12) par un isolant électrique (14), cette bande conductrice (15) étant en outre accessible au moins dans une zone, depuis l'extérieur du meuble.

2. Elément de meuble selon la revendication 1, **caractérisé en ce que** la bande conductrice (15) est disposée dans une gorge (13) réalisée dans le panneau (12).

3. Elément de meuble selon la revendication 2, **caractérisé en ce que** la gorge (13) est réalisée dans un chant dudit panneau (12).

4. Elément de meuble selon la revendication 3, **caractérisé en ce que** la bande conductrice (15) est disposée dans une gorge (13) dudit panneau (12) de telle façon qu'il soit en retrait par rapport à la surface du panneau.

5. Elément de meuble selon la revendication 1, **caractérisé en ce que** la bande conductrice (15) est entourée par ledit isolant électrique (14).

6. Elément de meuble selon la revendication 1, **caractérisé en ce que** ledit panneau (12) comporte une face conductrice d'électricité et une face non conductrice.

7. Meuble comportant au moins un élément de meuble (10) selon la revendication 1, **caractérisé en ce qu'**il comporte au moins une source d'alimentation électrique.

8. Meuble selon la revendication 7, **caractérisé en ce que** la source d'alimentation électrique est disposée dans un socle (16) comportant un panneau réalisé en un matériau conducteur d'électricité, ce panneau comportant une bande conductrice (15) électrique disposée contre ledit panneau, cette bande conductrice étant séparée dudit panneau par un isolant électrique (14), cette bande conductrice (15) étant en outre accessible au moins dans une zone, depuis l'extérieur du meuble, le socle (16) étant connecté électriquement à un élément de meuble (11) par un connecteur électrique (17).

9. Meuble selon la revendication 7, **caractérisé en ce qu'**il est formé de plusieurs éléments de meuble (11), ces éléments de meuble (11) étant connectés entre eux au moyen d'au moins un connecteur électrique (17).

10. Meuble selon la revendication 9, **caractérisé en ce que** le connecteur électrique (17) comporte trois bandes conductrices (19) agencées pour connecter entre elles, trois bandes conductrices (15) distinctes de panneaux (12) et/ou d'accessoires.

11. Meuble selon la revendication 9, **caractérisé en ce que** le connecteur électrique (17) comporte un interrupteur (48) agencé pour commander la connexion entre deux bandes conductrices (15) distinctes du meuble (10).

12. Meuble selon la revendication 7, **caractérisé en ce que** lesdits panneaux conducteurs (12) de deux éléments de meuble (11) adjacents sont en contact électrique l'un avec l'autre.

13. Accessoire pour élément de meuble selon la revendication 1, cet accessoire nécessitant une alimentation électrique, **caractérisé en ce qu'**il comporte une bande conductrice (36, 41) accessible au moins dans une zone, depuis l'extérieur de cet accessoire, cette bande conductrice (36, 41) étant disposée de manière à pouvoir être connectée électriquement à une bande conductrice (15) d'un élément de meuble.

14. Accessoire pour élément de meuble selon la revendication 13, **caractérisée en ce que** la connexion électrique entre ledit accessoire et ladite bande conductrice (15) de l'élément de meuble (11) se fait par contact direct entre la bande conductrice (36) dudit accessoire et la bande conductrice (15) dudit élément de meuble.

15. Accessoire pour élément de meuble selon la revendication 13, **caractérisée en ce que** la connexion électrique entre ledit accessoire et ladite bande conductrice (15) de l'élément de meuble (11) se fait par l'intermédiaire d'un élément de connexion électrique (17).
